# EUROPEAN PATENT SPECIFICATION

(11) **EP 1 131 997 B1**
(45) Date of publication and mention of the grant of the patent: **12.07.2006**
(21) Application number: 01202454.3
(22) Date of filing: 20.03.1995
(51) Int. Cl.: A01J 7/00, A01K 1/12, A01J 5/017

(54) **A construction including an implement for milking animals**
Konstruktion mit Vorrichtung zum Melken von Tieren
Construction à dispositif pour la traite d'animaux

(30) Priority: 25.03.1994 NL 9400471; 29.03.1994 NL 9400495
(43) Date of publication of application: 12.09.2001
(62) Divisional of application: 95912499.1
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 091 892
- EP-A- 0 551 957
- NL-A- 8 903 163
- NL-A- 9 200 097

## Description

The present invention relates to a construction including at least one implement for automatically milking animals, according to the preamble of claim 1. According to the invention such a construction comprises the characterizing features of claim 1. Embodiments are disclosed in claims 2 to 11.

Such a construction is known from e.g. European Patent application No. 0091892. By said construction, an animal is not automatically milked within a predetermined time span. A drawback of this construction is that a certain frequency or rhythm of milkings is imposed on the animals to a relatively extreme extent. It is an object of the present invention to provide a milking construction using a different criterion, preferably an animal-dependent one, for deciding whether or not an animal that has arrived at the milk box is to be milked. According to the invention, this is realized by the characterizing features of claim 1.

With such a construction, the frequency at which each of the animals will be milked is dependent of a characteristic of the animals. The animals are thus in a better position to pursue a frequency on their own, because the amount of milk being developed in an animal's udder as time lapses has a different value regarding each animal. By this scheme, one animal, e.g. a high-yield animal, can be milked once again earlier than another one having a lower yield.

As it may be possible that the milking robot is not in use permanently, animals can enter the milk box without being milked there. In that case such an animal can be given some fodder (concentrate). The moment fodder is supplied to a specific animal can be recorded in the computer and may be relevant for the decision whether the animal will be milked or not when it enters the milk box-the next time.

The invention further relates to a construction including at least one implement for automatically milking animals, comprising a computer, at least one milk box arranged for the milking of an animal and at least one milking robot for applying teat cups to the teats of the animal and for milking the animal, which implement includes means, co-operating with the computer, for identifying an animal that has arrived at the implement, characterized in that the implement is constructed in such a way that it is suitable for
- recording the amount of milk produced in a predetermined time period, e.g. the last twenty-four hours,
- calculating on the basis of this data the expected milk yield,
- allowing with preference animals to the milk box having an expected milk yield which exceeds the average milk yield of the animals in some extent.

The invention further relates to a construction including at least one implement for automatically milking animals, comprising a computer, at least one milk box arranged for milking an animal and at least one milking robot for applying teat cups to the teats, which implement includes at least one computer for identifying an animal that has arrived at the implement, characterized in that the computer is able to calculate the point of time from which an animal is allowed to enter the milk box and that the robot will be activated by a signal supplied by the computer, which signal is derived from an amount of the fodder eaten by said animal, whereby volume means or weighing means may supply this data to the computer.

For a better understanding of the invention and to show how the same may be carried into effect, reference will now be made, by way of example, to the accompanying drawings, in which:
Figure 1 is a plan view of a milk box incorporating a milking robot and showing the contours of a milch animal, a cow in the present case;
Figure 2 shows, to an enlarged scale, the end of the milking robot of Figure 1, wherein two pairs of teat cups are coupled to the end of a robot arm, each via a separate pivotal arm construction;
Figure 3 is a side view of the end of the robot arm in the direction of the arrow III in Figure 2;
Figure 4 illustrates a teat cup and the manner in which it is connected to the end of a pivotal arm of the milking robot;
Figure 5 is a cross-sectional view taken on the line V-V in Figure 2, and
Figure 6 shows four positions the teat cups can assume with respect to the end of the robot arm.

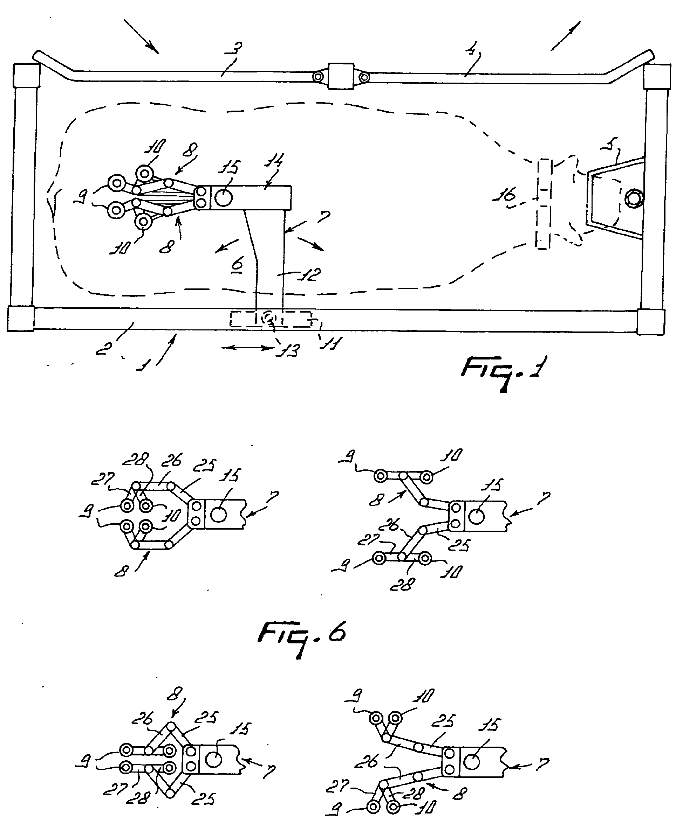

Figure 1 is a plan view of a milk box 1. which includes a railing 2 and at one side is provided with an entrance door 3 and an exit door 4. A feed trough 5 is fastened to the railing 2 at the leading side of the milk box 1. At the side facing the entrance door and the exit door there is a milking robot 6. The milking robot 6 includes a robot arm 7, to whose end teat cups 9 and 10 are connected with the aid of two pivotal arm constructions 8. This robot arm 7 is assembled from a first portion 11 which is arranged such at the side of the milk box that it is movable in the longitudinal direction of the milk box 1, a second portion 12 which is rotatable with respect to the first portion 11 about an upwardly directed shaft 13, and a third portion 14 which is rigidly connected to the second portion 12 at a substantially square angle. The robot arm 7 can be moved upwards as an integral whole by means of a (non-shown) cylinder. Also moving the robot arm 7 in the longitudinal direction of the milk box 1 and rotating the second robot arm portion 12 about the shaft 13 is effected with the aid of (non-shown) cylinders. These cylinders may be either hydraulic, pneumatic or electromechanical ones. A detector 15. e.g. a laser detector, is accommodated on the third robot arm portion 14, with the aid of which detector the position of the teats of an animal to be milked is determined. The pivotal arm constructions 8, at the end of each of which a teat cup 9 and 10 is fitted, are pivotally connected to the end of the third robot arm portion 14. In addition, a collar including a transponder 16, which is part of a (non-shown) cow identification system, is provided around the neck of the cow, which transponder co-operates with a sensor which may be placed near the feed trough 5 and is in connection with the computer of the system.

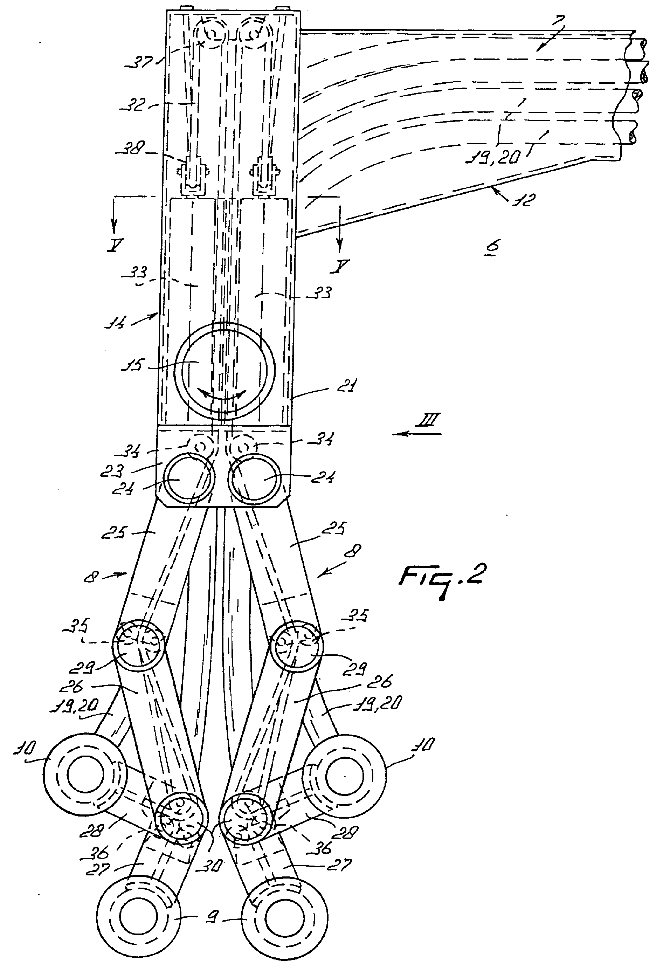

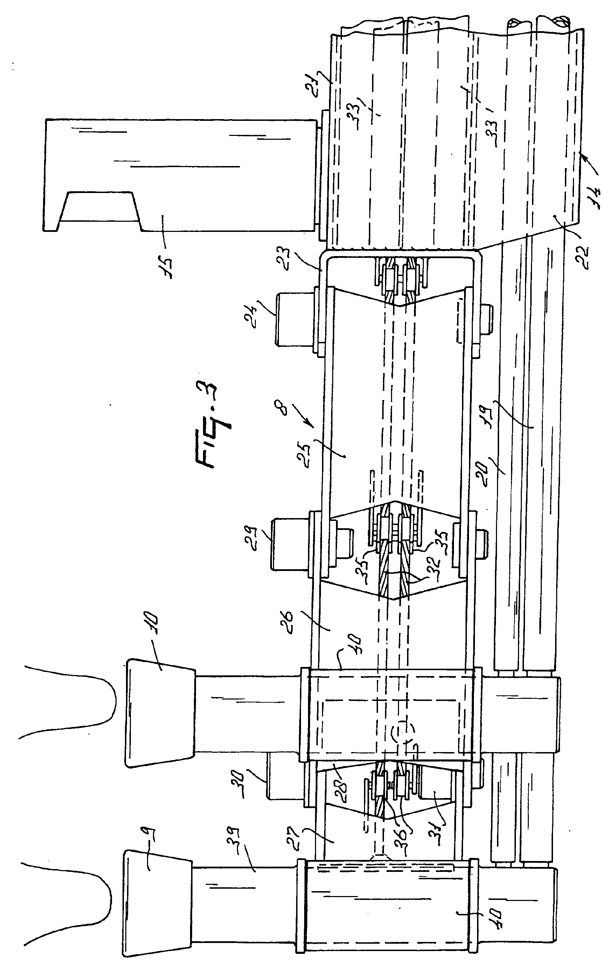

Figures 2 and 3 are a detailed representation of the end of the robot arm 7 with the pivotal constructions 8. The second portion 12 of the robot arm 7 consists of a first box-like beam and a second box-like beam disposed thereunder. The milk tubes 19 and the pulsation tubes 20 of the teat cups 9 and 10 are stored in the second box-like beam. Rigidly connected to the second robot arm portion 12 there is the third robot arm portion 14. Also this third robot arm portion 14 includes a first box-like beam 21 and, arranged thereunder, a second box-like beam 22, these box-like beams 21 and 22 being in connection with the box-like beams of the second robot arm portion 12. Also here, the milk tubes 19 and the pulsation tubes 20 extend through the lower box-like beam 22. The laser detector 15 is disposed pivotabty or rotatably on the third robot arm portion 14. A holder 23 is secured to the end of the third robot arm portion 14, in which holder the two pivotal arm constructions 8 are accommodated such that they are rotatable about predominantly vertically extending pivot shafts. The pivotal arm constructions 8 can be rotated with respect to the holder 23 with the aid of electric motors 24, which are in the form of stepping motors. Each of the two pivotal arm constructions 8 includes four pivotal arms 25, 26, 27 and 28. The pivotal arms 25 are rotatable in a predominantly horizontal plane with respect to the third robot arm portion 14 with the aid of the stepping motors 24. The pivotal arms 26 are rotatable in a predominantly horizontal plane with respect to the arms 25 with the aid of electric motors, more specifically stepping motors 29. The arms 27 and 28 are both capable of rotating in a predominantly horizontal plane relative to the arms 26 with the aid of electric motors, more specifically stepping motors 30 and 31, whose shafts are in alignment. The stepping motors 24, 29, 30 and 31 are disposed in the pivot points of the pivotal arm constructions 8, with the aid of which the teat cups 9 and 10 have been coupled to the robot arm 7.

With the aid of the two pivotal constructions 8, each assembled from four pivotal arms 25, 26, 27 and 28 and four stepping motors 24. 29, 30 and 31, the teat cups 9 and 10 can be moved in many configurations under the udder with respect to a robot arm 7 with detector 15 which is placed in a stationary position under the animal. The detector 15 is thereby located in a fixed position relative to the milk box 1, which promotes searching for and finding the teats. Figure 6 shows four of such configurations. By moving the milking robot 6 in the longitudinal direction of the milk box 1 and by pivoting the robot arm 7 about the upright shaft 13, the robot arm 7 and consequently the detector 15 can always be placed in such a manner under the animal that by operating the stepping motors 24, 29, 30 and 31 the teat cups 9 and 10 can be moved to under the teats of the animal to be milked, so that they can be connected by an upward motion of the robot arm 7 and by a vacuum produced in the teat cups. After the teat cups have been connected, the robot arm 7 can be moved downwardly and slightly forwardly. The teat cups 9 and 10 connected to the teats remain in this situation in connection with the robot arm 7 by means of a flexible pulling element 32, e.g. a cable or cord. One end of this pulling element 32 is connected to a teat cup 9, 10 and the other end to a cylinder accommodated in the third robot arm portion 14, which cylinder may be a pneumatic, hydraulic or electromechanical one. The cylinders provided for all four teat cups are denoted in Figures 2 and 5 by reference numeral 33. When the teat cups 9 and 10 are in the state in which they are not connected to the teats of an animal, they are pulled by the cylinders 33 and the pulling element 32 up against the end of the respective pivotal arms 27 and 28. As soon as the teat cups have been connected to the teats, the cylinders 33 are released, so that the robot arm 7 can be moved; the teat cups continue to be freely movable with respect to the robot arm 7. When a given udder,quarter has been stripped, which may be detected with the aid of a flow sensor in the relevant milk line, then the vacuum in the relevant teat cup is removed and simultaneously the relevant cylinder 33 is energized, so that, when the teat cup drops from the teat, it is immediately pulled up against the end of the relevant pivotal arm 27 or 28. Since the various pivotal arms are movable relative to each other and in conjunction movable relative to the third robot arm portion. 14, in which the cylinders 33 are accommodated, it is not well feasible to connect the pulling element 32 directly from the point of connection at the teat cup to the relevant cylinder. The pulling element 32 must be threaded along a plurality of pulleys near the pivot points between the pivotal arms relative to each other and of the pivotal arms 25 and the third robot arm portion 14. For each pivotal arm construction 8 there Is a set of pulleys for each of the two pulling elements 32, by means of which a teat cup 9 and a teat cup 10 are connected to two cylinders 33 located one above the other inside the third robot arm portion 14. For both pulling elements 32 these sets of pulleys are located one above the other. A set of pulleys includes one pulley 34 arranged near the pivot point between a pivotal arm construction 8 and the third robot arm portion 14, a pair of pulleys 35 near the pivot point between the pivotal arms 25 and 26 and a pair of pulleys 36 near the pivot point between the pivotal arm 26 on the one hand and the respective pivotal arms 27 and 28 on the other hand. By successively passing a pulling element 32 from its point of connection at a teat cup between two pulleys 36 and two pulleys 35 and thereafter around a pulley 34 to the point of connection at the relevant cylinder 33, the pulling element 32 is accommodated in such a manner in the pivotal arm construction 8 that the freedom of motion of the teat cups relative to the robot arm 7 continues to be ensured to the best possible extent, when these cups are moved in predetermined configurations to under the teats of an animal. In particular, various configurations, such as those shown in Figure 6, can be obtained without any difficulties. The points of connection of the pulling elements 32 at the operating cylinders 33 are located at that side of the third robot arm portion 14 that is remote from the pivotal arm constructions 8. Each of the pulling elements extends from a teat cup between pairs of pulleys 36 and 35 and along a pulley 34 through the entire third robot arm portion 14 to the rear side thereof and from there via a pulley 37 to a pulley 38 disposed at the rear side of the cylinder and from there to the rear wall of the third robot arm portion 14. By passing the pulling element 32 along the pulleys 37 and 38 there is effected an extra large stroke of the pulling element relative to the much more limited stroke of the operating cylinder 33.

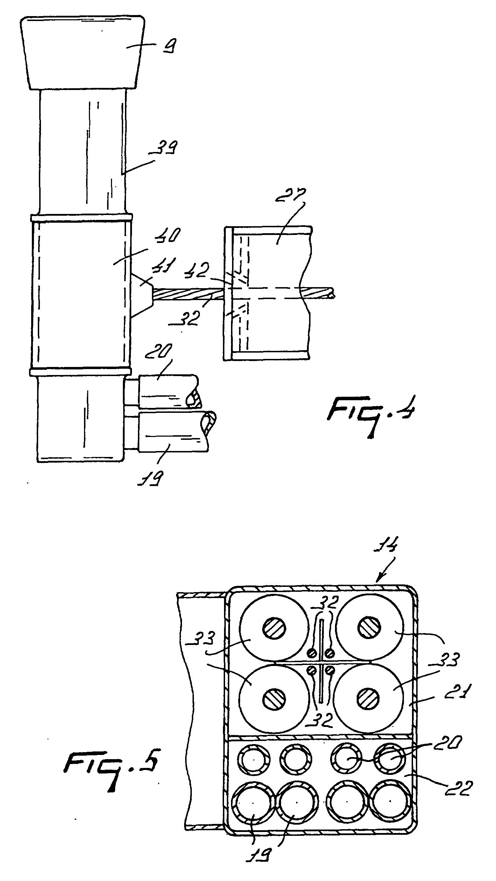

With the ample freedom of motion of the teat cups 9 and 10 with respect to the robot arm 7, it is advantageous when the milk and/or pulsation tubes 19 and 20, respectively, connected to the teat cup allow this freedom of motion of the teat cups to the best possible extent. To achieve this, the teat cups are connected to the pivotal arm constructions 8 capably of rotating freely about their own longitudinal axis. As is shown in Figure 4. this is effected by disposing a sleeve 40 around the exterior housing 39 of the teat cups. The pulling element 32 then acts on the sleeve 40. Because of the capability of the teat cup to rotate freely in the sleeve 40, the milk and/or pulsation tubes allow the pivotal arms to move unimpededly in a pivotal arm construction. So as to render it possible for the sleeve 40 to be pulled in the appropriate manner against the end of the relevant pivotal arm of the pivotal arm construction, the sleeve 40 is provided with a bulging portion 41. which co-operates with a seat 42 in the end of a pivotal arm 27 and 28. respectively.

When, after the teat cups have been connected to the teats of the animal to be milked, one of the teat cups drops from its teat, e.g. due to kicking of the animal, then this teat cup is Immediately pulled up against the end of the relevant pivotal arm and it is connected again by determining once again with the aid of the detector the position of the teat from which its cup has dropped. In this situation, the stepping motors of the relevant pivotal arm construction can be controlled such that the loose teat cup is moved to under said teat, whereafter the robot arm is moved upwards and a vacuum is produced in the teat cup until the cup grips the teat. Therefore, the present construction of individually controllable teat cups renders it possible for the teat cups to be connected both simultaneously and each one individually.

The invention relates to a milking implement for automatically milking animals, as described before. The entrance door 3 and the exit door 4 may be in connection with a dwelling area for animals, such as a cowshed or pasture field. Through a suitable measuring element, the computer is capable of determining the amount of milk produced during each milking of each animal and of recording it, together with the respective point of time of milking, into an electronic memory. The milking implement also includes an identification element or sensor, which communicates with the computer, enabling an animal to be identified. In the present embodiment, this sensor is provided in the milk box near the feed trough 5. However, the sensor may equally well be provided outside the milk box for the implementation of a pre-selection on the admission of the animals to the milk box. The present embodiment makes use of the known per se identification system, wherein the sensor operates in conjunction with the transponder 16 carried perrnanently by each of the animals.

In the present embodiment, the entrance door 3 and the exit door 4 of the milk box are automatically control-lable through the computer. In the initial position, the entrance door 3 is open and it is closed when the presence of an animal has been established automatically. When the animal is identified by the computer, the computer records the actual time as the point of time at which the animal reports herself in the milking implement. On the basis of the relevant animal's recorded history data on the times of previous milkings, the amount of milk given in each case, and on the basis of the point of time, as determined by the computer, at which an animal present has been identified, it is then determined by the computer what is the expected amount of milk to be given by that animal. For this purpose, the computer derives from the recorded data what is the average obvious development of milk or milk yield per unit of time of the relevant animal, expressed in litres/hr, and how much is the length of time between the instant of identification and the latest milking of the animal present. Then, the product of the average milk development in the animal per unit of time and said length of time is the milk yield to be expected. If the milk yield to be expected is higher than a base value to be set, e.g. amounting to six litres, the computer activates the milking robot to milk the animal. When the milking of the animal has been completed or when the amount of milk to be expected does not exceed the base value, the exit door 4 is opened through the computer, so that the animal, whether or not being automatically driven off, leaves the milk box. The amount of milk produced by an animal will be the base on which the computer will decide if the animal will be milked again, when it comes to the milk box.

The value of the average milk development per unit of time of each in-dividual animal is determined automatically by means of a progressive average derived from the recorded data per animal. Upon identification of the animal in the milk box, each time a calculation is made for this purpose on the basis of a number, ten in the present embodiment, of such record entries conceming previous milkings of the animal. In doing so, the milk yield of the set number of milkings is summed and the sum is divided by the difference in time between the instant of the last milking recorded and that of the milking preceding the final milking of the set number of milkings to be included in the calculation. The possibility that an animal does not produce milk in the relatively short periods that she is in the milking implement to be milked each time, can be disregarded.

The described identification of the animal and the determination of the milk yield to be expected can already take place in a-buffer area or selection area belonging to the milking implement, in which area the entrance to the milk box is incorporated. For this purpose, such a buffer area comprises a sensor communicating with the computer for identifying an animal present therein, an exit to be released through the computer and giving access to the area for moving about freely in a cowhouse or pasture field, and a similar exit giving access to the milk box. In the present embodiment, the animal present in the buffer area is led into the said dwelling area if the milk yield to be expected does not exceed the base value, whereas it is led into the milk box if the milk yield to be expected exceeds the base value. In the latter case, identification in the milk box 1 is not required any more and it is possible to proceed to the milking of the animal immediately. A simpler but less elegant pre-selection can also be effected by simply providing an identification sensor near the entrance door 3 of the milk box 1. The entrance door 3 is then not opened until there is reported an animal which is allowed to be milked on account of the described criterion. Animals which are not to be milked under the criterion of the invention will disappear of their own account or will be pushed away from the entrance door 3 by other animals.

According to the invention, the embodiments set forth hereinbefore have the advantage that the decision whether or not a reporting animal will be milked is made by means of a condition which, in a simple manner, plays along with the production feature of each of the animals. For high-yield dairy animals will be milked earlier and more frequently than relatively low-yield animals, which has a favourable effect on the health of the animals and the efficiency of the milking implement in use. Because the milk development in animals, at least in cows, after a first phase in which it varies linearly with time, appears to show a phase with diminishing returns, it should further not be deemed to be beyond the bounds of possibility that, owing to the milkings being performed as early as feasible, the invention leads to an increase in the milk yield per day, especially for high-yield animals.

Furthermore, the construction set forth may also be adopted e.g. in a milking implement having a plurality of milk boxes or a plurality of milking robots, while the number of selection areas, too, may not be limitative to the application of the invention.

## Claims

1. A construction including at least one Implement for automatically milking animals, comprising a computer, at least one milk box arranged for milking an animal and at least one milking robot for applying teat cups to the teats which implement includes at least one computer for identifying an animal that has arrived at the implement, **characterized in that** the computer is provided with a programme, with the aid of which the implement is suitable for
- recording the amount of milk produced by an animal during milking,
- calculating on the basis of this data the expected milk yield of the animal, by calculating the amount of milk produced between the point of time of reporting and that of a previous milking of the animal present in the milk box, and activating the milking robot on condition that the expected milk yield of said animal will exceed a base value.

2. A construction according to claim 1, **characterized in that** at the milk box there is provided an animal-identification sensor, which supplies an animal-identification signal to the computer, on the basis of which signal the computer may automatically release the entrance of the milk box.

3. A construction according to claim 1 or 2, **characterized in that** when an animal is identified by the computer, the computer records the actual time as the point of time at which the animal reports herself in the milking implement.

4. A construction according to claim 3, **characterized in that** on the basis of the relevant animal's recorded history data on the times of previous milkings, the amount of milk given in each case, and on the basis of the point of time, as determined by the computer, at which the animal present has been identified, it is then determined by the computer what is the expected amount of milk to be given by that animal.

5. A construction according to claim 4, **characterized in that** the computer derives from the recorded data what is the average obvious development of milk or milk yield per unit of time of the relevant animal, expressed in litres/hr, and how much is the length of time between the instant of identification and the latest milking of the animal.

6. A construction according to claim 5, **characterized in that** the product of the average milk development in the animal per unit of time and said length of time is the milk yield to be expected.

7. A construction according to claim 4, 5 or 6, **characterized in that** the value of the average milk development per unit of time of each individual animal is determined automatically by means of a progressive average derived from the recorded data per animal.

8. A construction according to claim 7, **characterized in that** upon identification of the animal In the milk box, each time a calculation is made for this purpose on the basis of a number, e.g. ten, of such record entries concerning previous milkings of the animal.

9. A construction according to claim 8, **characterized in that** the milk yield of the set number is summed and the sum is divided by the difference in time between the instant of the last milking recorded and that of the milking preceding the final milking of the set number of milkings to be Included in the calculation.

10. A construction induding at least one Implement for automatically milking animals, comprising a computer, at least one milk box arranged for the milking of an animal and at least one milking robot for applying teat cups to the teats of the animal and for milking the animal, which implement includes means, co-operating with the computer, for identifying an animal that has arrived at the implement, **characterized in that** the implement is constructed in such a way that it is suitable for
- recording the amount of milk produced in a predetermined time period, e.g. the last twenty-four hours,
- calculating on the basis of this data the expected milk yield,
- allowing with preference animals to the milk box having an expected milk yield which exceeds the average milk yield of the animals in some extent.

11. A construction induding at least one implement for automatically milking animals, comprising a computer, at least one milk box arranged for milking an animal and at least one milking robot for applying teat cups to the teats, which implement includes at least one computer for identifying an animal that has arrived at the implement, **characterized in that** the computer is able to calculate the point of time from which an animal is allowed to enter the milk box and that the robot will be activated by a signal supplied by the computer, which signal is derived from an amount of the fodder eaten by said animal, whereby volume means or weighing means may supply this data to the computer.

## Patentansprüche

1. Anlage mit mindestens einer Vorrichtung zum automatischen Melken von Tieren, die einen Computer, mindestens eine zum Melken eines Tieres geeignete Melkbox und mindestens einen Melkroboter zum Anschließen von Zitzenbechern an die Zitzen umfaßt, wobei die Vorrichtung mindestens einen Computer zum Identifizieren eines Tieres aufweist, das sich in der Vorrichtung einfindet,
**dadurch gekennzeichnet, daß** der Computer mit einem Programm versehen ist, mittels dessen die Vorrichtung geeignet ist,
- die von einem Tier während des Melkens gelieferte Milchmenge aufzuzeichnen,
- auf der Basis dieser Daten die voraussichtliche Milchleistung des Tieres **dadurch** zu berechnen, daß die Milchmenge berechnet wird, die zwischen dem Zeitpunkt des Sicheinfindens und dem eines vorhergehenden Melkdurchganges des in der Melkbox befindlichen Tieres geliefert wurde, und
- Aktivieren des Melkroboters, falls die voraussichtliche Milchleistung des Tieres einen Basiswert überschreitet.

2. Anlage nach Anspruch 1,
**dadurch gekennzeichnet, daß** die Melkbox mit einem Tieridentifikationssensor versehen ist, der ein Tieridentifikationssignal an den Computer gibt, anhand dessen der Computer automatisch den Eingang der Melkbox freigeben kann.

3. Anlage nach Anspruch 1 oder 2,
**dadurch gekennzeichnet, daß** der Computer nach der Identifizierung eines Tieres durch den Computer den aktuellen Zeitpunkt als den Zeitpunkt aufzeichnet, zu dem das Tier sich in der Melkvorrichtung einfindet.

4. Anlage nach Anspruch 3,
**dadurch gekennzeichnet, daß** auf der Basis der aufgezeichneten historischen Daten des betreffenden Tieres bezüglich der Zeiten von vorhergehenden Melkdurchgängen und der jeweils gelieferten Milchmenge sowie auf der Basis des von dem Computer ermittelten Zeitpunktes, zu dem das anwesende Tier identifiziert worden ist, von dem Computer ermittelt wird, welche voraussichtliche Milchmenge von diesem Tier geliefert werden wird.

5. Anlage nach Anspruch 4,
**dadurch gekennzeichnet, daß** der Computer von den aufgezeichneten Daten ableitet, welches die durchschnittliche wahrscheinliche Milchentwicklung oder Milchleistung pro Zeiteinheit des betreffenden Tieres ist, ausgedrückt in Liter/Stunde, und wie groß der Zeitraum zwischen dem Zeitpunkt der Identifizierung und dem letzten Melken des Tieres ist.

6. Anlage nach Anspruch 5,
**dadurch gekennzeichnet, daß** das Produkt aus der durchschnittlichen Milchentwicklung in dem Tier pro Zeiteinheit und dem Zeitraum die zu erwartende Milchleistung ist.

7. Anlage nach Anspruch 4, 5 oder 6,
**dadurch gekennzeichnet, daß** der Wert der durchschnittlichen Milchentwicklung pro Zeiteinheit jedes einzelnen Tieres automatisch mit Hilfe eines dynamischen Mittelwertes ermittelt wird, der von den für jedes Tiere aufgezeichneten Daten abgeleitet wird.

8. Anlage nach Anspruch 7,
**dadurch gekennzeichnet, daß** beim Identifizieren des Tieres in der Melkbox zu diesem Zweck jedesmal eine Berechnung auf der Basis einer Anzahl, z. B. zehn, solcher Aufzeichnungen über vorhergehende Melkdurchgänge des Tieres durchgeführt wird.

9. Anlage nach Anspruch 8,
**dadurch gekennzeichnet, daß** die Milchleistung der eingestellten Anzahl summiert wird und die Summe durch die Zeitdifferenz zwischen dem Zeitpunkt des letzten aufgezeichneten Melkdurchganges und dem Zeitpunkt des Melkdurchganges, der dem letzten Melkdurchgang der eingestellten Anzahl von Melkdurchgängen vorausgegangen ist, geteilt wird, um dies in die Berechnung aufzunehmen.

10. Anlage mit mindestens einer Vorrichtung zum automatischen Melken von Tieren, die einen Computer, mindestens eine zum Melken eines Tieres geeignete Melkbox und mindestens einen Melkroboter zum Anschließen von Zitzenbechern an die Zitzen des Tieres und zum Melken des Tieres umfaßt, wobei die Vorrichtung eine mit dem Computer zusammenwirkende Vorrichtung zum Identifizieren eines Tieres aufweist, das sich in der Vorrichtung einfindet,
**dadurch gekennzeichnet, daß** die Vorrichtung derart konstruiert ist, daß sie geeignet ist,
- die innerhalb eines vorgegebenen Zeitraumes, z. B. innerhalb der letzten vierundzwanzig Stunden, produzierte Milchmenge aufzuzeichnen,
- auf der Basis dieser Daten die voraussichtliche Milchleistung zu berechnen,
- vorzugsweise solche Tiere zur Melkbox zuzulassen, die eine voraussichtliche Milchleistung aufweisen, welche die durchschnittliche Milchleistung der Tiere um ein gewisses Maß übersteigt.

11. Anlage mit mindestens einer Vorrichtung zum automatischen Melken von Tieren, die einen Computer, mindestens eine zum Melken eines Tieres geeignete Melkbox und mindestens einen Melkroboter zum Anschließen von Zitzenbechern an die Zitzen umfaßt, wobei die Vorrichtung mindestens einen Computer zum Identifizieren eines Tieres aufweist, das sich in der Vorrichtung eingefunden hat,
**dadurch gekennzeichnet, daß** der Computer den Zeitpunkt berechnen kann, zu dem ein Tier die Melkbox betreten darf, und daß der Roboter durch ein von dem Computer geliefertes Signal aktiviert wird, das von einer von dem Tier verzehrten Futtermenge abgeleitet ist, wobei diese Daten durch eine Volumenvorrichtung oder eine Wiegevorrichtung an den Computer geliefert werden können.

## Revendications

1. Construction comprenant au moins un dispositif destiné à traire automatiquement des animaux, comprenant un ordinateur, au moins un box de traite agencé pour traire un animal et au moins un robot de traite destiné à appliquer des gobelets trayeurs sur les trayons, lequel dispositif comprend au moins un ordinateur destiné à identifier un animal qui est arrivé au niveau du dispositif, **caractérisée en ce que** l'ordinateur est muni d'un programme, à l'aide duquel l'équipement est adapté pour
- enregistrer la quantité de lait produite par un animal pendant la traite,
- calculer sur la base de ces données le rendement de lait prévu de l'animal, en calculant la quantité de lait produite entre le moment de signalement et celui d'une précédente traite de l'animal présent dans le box de traite, et
- activer le robot de traite à condition que le rendement de lait prévu dudit animal dépasse une valeur de base.

2. Construction selon la revendication 1, **caractérisée en ce qu'**un capteur d'identification d'un animal est prévu au niveau du box de traite, lequel capteur fournit un signal d'identification d'un animal à l'ordinateur, signal sur la base duquel l'ordinateur peut automatiquement libérer l'entrée du box de traite.

3. Construction selon la revendication 1 ou 2, **caractérisée en ce que** lorsqu'un animal est identifié par l'ordinateur, l'ordinateur enregistre l'heure réelle comme étant le moment auquel l'animal se signale dans le dispositif de traite.

4. Construction selon la revendication 3, **caractérisée en ce que**, sur la base des données historiques enregistrées de l'animal concerné sur les heures des traites précédentes, la quantité de lait donnée dans chaque cas, et sur la base du moment, tel que déterminé par l'ordinateur, auquel l'animal présent a été identifié, l'ordinateur détermine ensuite la quantité de lait prévue que donnera cet animal.

5. Construction selon la revendication 4, **caractérisée en ce que** l'ordinateur dérive à partir des données enregistrées la production de lait moyenne prévisible ou le rendement de lait par unité de temps de l'animal concerné, exprimé(e) en litres/h, et l'intervalle de temps entre l'instant de l'identification et la dernière traite de l'animal.

6. Construction selon la revendication 5, **caractérisée en ce que** le produit de la production de lait moyenne de l'animal par unité de temps et ledit intervalle de temps représentent le rendement de lait à prévoir.

7. Construction selon la revendication 4, 5 ou 6, **caractérisée en ce que** la valeur de la production de lait moyenne par unité de temps de chaque animal individuel est déterminée automatiquement au moyen d'une moyenne progressive dérivée à partir des données enregistrées par animal.

8. Construction selon la revendication 7, **caractérisée en ce qu'**après l'identification de l'animal dans le box de traite, un calcul est effectué à chaque fois à cet effet sur la base d'un nombre, par exemple dix, de telles entrées d'enregistrement concernant les précédentes traites de l'animal.

9. Construction selon la revendication 8, **caractérisée en ce que** le rendement de lait du nombre fixé est ajouté et **en ce que** la somme est divisée par la différence de temps entre l'instant de la dernière traite enregistrée et celui de la traite précédant la traite finale du nombre fixé de traites à inclure dans le calcul.

10. Construction comprenant au moins un dispositif destiné à traire des animaux automatiquement, comprenant un ordinateur, au moins un box de traite agencé pour la traite d'un animal et au moins un robot de traite destiné à appliquer des gobelets trayeurs sur les trayons de l'animal et à traire l'animal, lequel dispositif comprend des moyens, coopérant avec l'ordinateur, destinés à identifier un animal qui est arrivé au niveau du dispositif, **caractérisée en ce que** le dispositif est construit de telle sorte qu'il est adapté pour
- enregistrer la quantité de lait produite pendant une période de temps prédéterminée, par exemple les dernières vingt-quatre heures,
- calculer sur la base de ces données le rendement de lait prévu,
- autoriser de préférence l'accès au box de traite aux animaux ayant un rendement de traite prévu qui dépasse le rendement de lait moyen des animaux dans une certaine mesure.

11. Construction comprenant au moins un dispositif destiné à traire des animaux automatiquement, comprenant un ordinateur, au moins un box de traite agencé pour traire un animal et au moins un robot de traite destiné à appliquer des gobelets trayeurs sur les trayons, lequel dispositif comprend au moins un ordinateur destiné à identifier un animal qui est arrivé au niveau du dispositif, **caractérisée en ce que** l'ordinateur est capable de calculer le moment à partir duquel un animal est autorisé à entrer dans le box de traite et **en ce que** le robot sera activé par un signal fourni par l'ordinateur, lequel signal est dérivé à partir d'une quantité de fourrage mangée par ledit animal, de sorte que le moyen volumétrique ou le moyen de pesage peut fournir ces données à l'ordinateur.
